# FASCICULE DE BREVET EUROPEEN

(11) **EP 1 257 470 B1**
(45) Date de publication et mention de la délivrance du brevet: **09.06.2004**
(21) Numéro de dépôt: 01907869.0
(22) Date de dépôt: 22.02.2001
(51) Int. Cl.: B64G 1/64, B64G 1/00, F42B 12/60

(54) **PROCEDE DE FABRICATION D'UNE EMBASE DE SUPPORT D'UN SATELLITE ARTIFICIEL SUR UNE PLATE-FORME D'EMPORT D'UNE PLURALITE DE TELS SATELLITES**
VERFAHREN ZUR FERTIGUNG EINES SOCKELS FÜR DIE HALTERUNG EINES SATELLITEN AUF EINER TRANSPORTPLATTFORM FÜR MEHRERE SATELLITEN
METHOD FOR MAKING A SUPPORT BASE PLATE FOR AN ARTIFICIAL SATELLITE ON A DISPENSER PLATFORM FOR A PLURALITY OF SUCH SATELLITES

(30) Priorité: 23.02.2000 FR 0002250; 23.02.2000 FR 0002251
(43) Date de publication de la demande: 20.11.2002
(73) Titulaire: CENTRE NATIONAL D'ETUDES SPATIALES, F-75001 Paris (FR)
(72) Inventeur: BEYER, Jean-Claude, F-91210 Draveil (FR)
(74) Mandataire: Colas, Jean-Pierre
(86) Numéro de dépôt international: PCT/FR2001/000512
(87) Numéro de publication internationale: WO 2001/062595

(56) Documents cités:
- DE-A- 4 243 562
- FR-A- 2 735 099
- US-A- 5 884 866

## Description

La présente invention est relative à un procédé de fabrication d'une embase de support d'un satellite artificiel, conçue pour être montée sur une plate-forme d'emport d'une pluralité de tels satellites, cette plate-forme formant partie d'un lanceur spatial assurant la mise en orbite terrestre desdits satellites. Plus particulièrement, l'invention est relative à un tel procédé de fabrication appliqué à des embases disposées en couronne sur la plate-forme d'emport, chaque embase présentant une paroi cylindrique comprenant des éléments de surface incurvés et des éléments de surface sensiblement plans.

On décrit dans la demande de brevet français N° 00 02251 déposée le 23 février 2000 par la demanderesse et intitulée "Procédé de lancement d'une pluralité de satellites artificiels montés sur un même lanceur spatial et dispositif pour la mise en oeuvre de ce procédé" un procédé de lancement d'une grappe de satellites conçus pour faire partie d'une constellation de satellites de communications de données numériques, d'informations vocales ou vidéo, voire d'informations multimédia, par exemple. Les satellites sont montés en couronne autour de l'axe longitudinal du lanceur, sur une plate-forme formant partie d'une structure d'emport. La base de chaque satellite est fixée temporairement sur une embase de forme trapézoïdale, généralement conforme à celle de la section du satellite. On choisit cette forme car elle s'inscrit aisément dans un élément de couronne circulaire et elle maximise la surface de la section du satellite et donc son volume.

Suivant la demande de brevet français précitée, les embases sont munies de moyens permettant de les faire basculer de manière à déployer les "cônes de déboîtement" des satellites avant de les libérer, ceci pour supprimer tout risque de collision entre les satellites libérés sans que cela n'exige des contrôles d'attitude renforcés, et donc coûteux, de ces satellites.

la demande de brevet français N° 2 735 099 décrit un dispositif adaptateur basculant pour l'emport de plusieurs charges utiles sur un même lanceur, propre à constituer l'embase décrite ci-dessus.

On conçoit que la forme de chaque embase dépend de l'espace qui lui est alloué sur la plate-forme qui la reçoit et donc de l'ouverture angulaire de l'élément de couronne circulaire qu'elle occupe sur cette surface. Cette ouverture angulaire est fonction du nombre de satellites installés sur cette plate-forme, ce nombre pouvant varier d'un lancement à un autre.

On comprend qu'il est alors nécessaire de fabriquer des embases dont la forme est notamment fonction de ce nombre. La fabrication et le stockage d'une grande variété de telles embases, couramment appelées "adaptateur de charge utile", en vue de disposer des embases convenant à tel ou tel lancement d'un nombre variable de satellites, est un processus long et coûteux qui ne satisfait pas aux besoins actuels en matière de lancement de constellation de satellites, exigeant à la fois une rapidité d'adaptation accrue des matériels nécessaires et une réduction des coûts de lancement.

La présente invention a précisément pour but de fournir un procédé de fabrication d'embases de support de satellites artificiels satisfaisant, à la fois, à ces deux contraintes.

On atteint ce but de l'invention, ainsi que d'autres qui apparaîtront à la lecture de la description qui va suivre, avec un procédé de fabrication d'une embase de support d'un satellite artificiel, conçue pour être montée sur une plate-forme d'emport d'une pluralité de tels satellites formant partie d'un lanceur spatial assurant la mise en orbite terrestre desdits satellites, les diverses embases des support des satellites étant disposées en couronne sur ladite plate-forme, chaque embase présentant une paroi cylindrique comprenant des éléments de surface incurvés et des éléments de surface sensiblement plans, ce procédé étant remarquable en ce qu'on dispose des éléments de paroi modulaires à surface incurvée et des éléments de paroi à surface plane selon une géométrie d'embase prédéterminée et on assemble lesdits éléments suivant leurs bords adjacents, pour réaliser ladite paroi cylindrique de ladite embase.

Comme on le verra plus loin en détail, ce procédé permet, par l'utilisation d'éléments modulaires utilisables dans diverses configurations d'embases, de rationaliser la fabrication d'embases de formes variées, c'est-à-dire d'en réduire les temps et coûts de mise en oeuvre.

Suivant d'autres caractéristiques de la présente invention, préalablement à la disposition des éléments de paroi modulaires à surface incurvée selon une géométrie d'embase prédéterminée, lesdits éléments de paroi modulaires sont retaillés pour s'adapter à ladite géométrie. Ces éléments de paroi modulaires peuvent être cylindriques de révolution. La géométrie d'embase est choisie parmi une pluralité de telles géométries inscriptibles dans un élément de couronne circulaire, en fonction de la géométrie et du nombre de satellites à monter sur la structure d'emport.

D'autres caractéristiques et avantages de la présente invention apparaîtront à la lecture de la description qui va suivre et à l'examen du dessin annexé dans lequel :
- les figures 1 et 2 sont des vues schématiques en élévation d'une embase du type de celles réalisables par le procédé de fabrication selon la présente invention, dans deux positions différentes de cette embase,
- la figure 3 est une vue schématique en plan de l'embase des figures 1 et 2,
- les figures 4 et 5 sont des vues en coupe transversale d'éléments de paroi modulaires, utilisés dans le procédé de fabrication suivant l'invention,
- la figure 6 est une vue en plan illustrant le procédé suivant l'invention, appliqué à la fabrication d'une embase du type de celle représentée aux figures 1 à 3, et
- les figures 7 et 8 illustrent la fabrication de variantes de l'embase de la figure 6, par le procédé suivant l'invention.

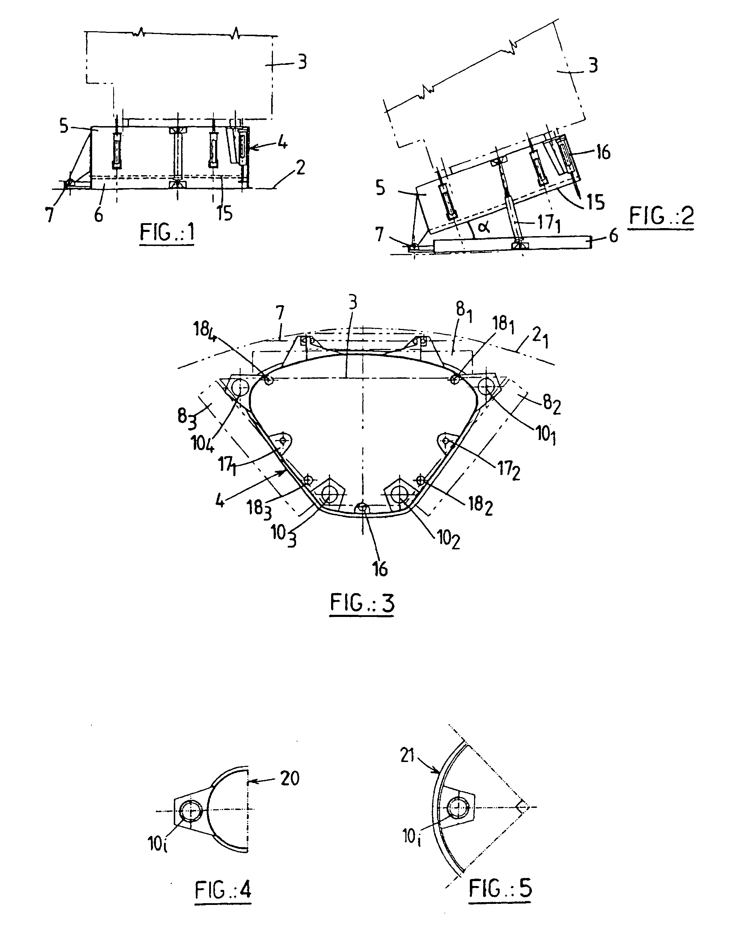

On se réfère à la figure 1 du dessin annexé pour décrire brièvement la structure d'une embase, ou adaptateur de charge utile, du type de celles visées par la présente invention. Pour plus de détails concernant cette structure, on se référera à la demande de brevet français N° 00 02251 précitée.

L'embase 4 représentée comprend une paroi latérale cylindrique présentant, en section droite, une forme généralement trapézoïdale (voir figure 3), propre à supporter un satellite prismatique 3 dont la section droite en trapèze isocèle est représentée en trait interrompu également à cette figure 3. Le satellite 3 porte classiquement des panneaux de cellules solaires 8₁,8₂,8₃ et des antennes ou autres organes (non représentés).

La paroi latérale de l'embase 4 est divisée en deux parties adjacentes 5 et 6, l'une (5) recevant le satellite 3 et l'autre (6) constituant un fond fixé sur une plate-forme 2 d'une structure d'emport. Entre ces deux parties est disposée un séparateur pyrotechnique 15 propre à déchirer sélectivement cette paroi latérale en individualisant ainsi les parties 5 et 6, pour permettre à la partie 5, supérieure, de basculer sur la partie 6 de fond, en faisant basculer avec elle le satellite 3 qu'elle porte, suivant le procédé de déploiement des "cônes de déboîtement" des divers satellites portés par la plate-forme 2, procédé décrit dans les demandes de brevet français précitées. Ce basculement est rendu possible par la présence de moyens permettant d'articuler la partie supérieure 5 sur le fond 6 autour d'un axe d'articulation 7. On a représenté à la figure 2, l'embase et le satellite dans une position basculée, prédéterminée, correspondant à ce déploiement.

Des organes de liaison temporaire 10₁,10₂,10₃,10₄ sont disposés sur la partie supérieure 5 pour recevoir le satellite 3, au niveau des angles de sa section en trapèze, comme représenté à la figure 3. Celle-ci reçoit encore un vérin impulsionnel 16, pour appliquer un effort de basculement à la partie supérieure 5, après déchirement de la paroi latérale de l'embase 4, des vérins anti-retour 17₁,17₂, pour bloquer la partie 5 dans une position angulaire de basculement prédéterminée et quatre organes à ressort 18₁,18₄ pour appliquer au satellite 3 une impulsion axiale, après fonctionnement du séparateur pyrotechnique 15 et du vérin impulsionnel 16 et mise hors service des organes de liaison 10ᵢ, cette impulsion axiale permettant la séparation du satellite du lanceur.

Les organes 10ᵢ,15,16,17₁,17₂ et 18ᵢ sont des organes standard qui peuvent être utilisés sur des embases présentant des géométries différentes. Pour pousser encore la rationalisation de la fabrication de ces embases, suivant le but poursuivi par la présente invention, l'effort doit donc porter essentiellement sur la fabrication de la paroi latérale de l'embase, dont la forme dépend étroitement de celle de l'élément de couronne circulaire dans lequel elle doit s'inscrire sur la plate-forme 2.

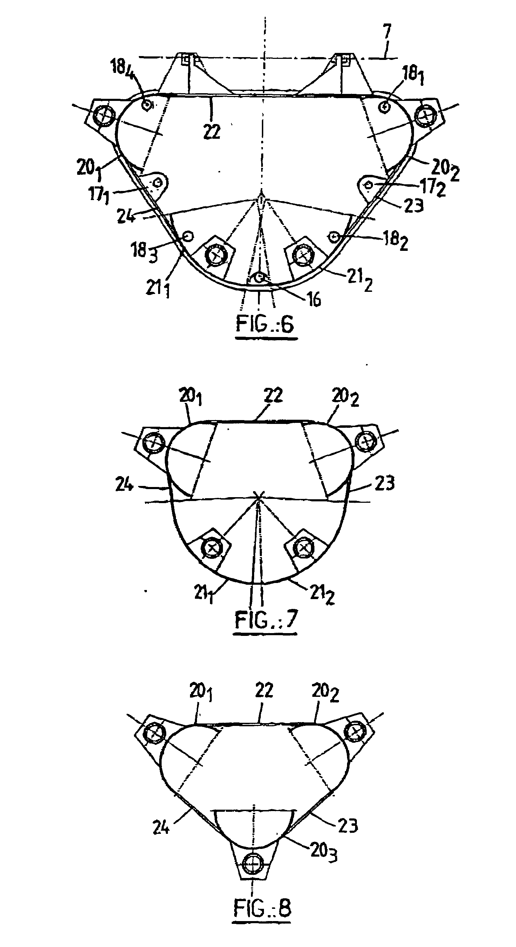

Suivant la présente invention, on décompose cette paroi, convexe, pour assurer sans déformation la transmission d'efforts entre le satellite 3 et la plate-forme 2, en éléments de paroi à surface incurvée et en éléments de paroi à surface plane ou sensiblement plane, et on organise la fabrication de cette paroi par assemblage de tels éléments. Ce procédé est illustré aux figures 4 à 6, où les figures 4 et 5 représentent deux éléments de paroi modulaires à surface incurvée 20 et 21 respectivement, et où la figure 6 illustre un assemblage de tels éléments avec des éléments de paroi plats 22, 23 et 24.

A titre d'exemple illustratif et non limitatif seulement, on a représenté à la figure 4 un élément de paroi modulaire 20 présentant une surface hémicylindrique de révolution et, à la figure 5, un élément de paroi modulaire 21 présentant une surface cylindrique de révolution dont l'angle au centre présente une ouverture de 90°. Chacun porte un organe de liaison 10, visible sur la figure 2, cet organe étant fixé soit sur la partie convexe de l'élément 20 soit dans la concavité de l'élément 21.

Comme illustré à la figure 6, en disposant deux éléments 20₁,20₂ aux extrémités du grand côté d'une forme trapézoïdale et deux éléments 21₁,21₂ aux extrémités du petit côté de cette forme, et en raccordant ces éléments soit entre eux (éléments 21₁ et 21₂) soit par l'intermédiaire d'éléments plans 22,23,24, on peut reconstituer une paroi d'embase sensiblement conforme à celle de l'embase représentée à la figure 2.

Il est évidemment nécessaire, préalablement à l'assemblage de ces éléments, par mécanosoudage par exemple, de retailler ceux-ci pour qu'ils se raccordent bord à bord et tangentiellement, suivant diverses géométries d'embase adaptées au lancement de grappes de satellites en nombre et/ou forme différents.

On a représenté aux figures 7 et 8, à titre d'exemple illustratif et non limitatif seulement, deux autres géométries de paroi d'embases réalisables à l'aide des éléments de paroi décrits ci-dessus, ces géométries étant choisies parmi un grand nombre de géométries possibles, pouvant être réalisées par le procédé suivant l'invention. C'est ainsi que la section de la paroi de l'embase de la figure 7 tend vers une forme circulaire par réduction de la longueur de l'élément de paroi plan 22 de la paroi de la figure 5, alors que celle de la paroi de la figure 8 tend vers une forme triangulaire, basée sur l'utilisation de trois éléments 20₁,20₂,20₃ du type représenté à la figure 3.

On comprend maintenant que le procédé selon la présente invention permet de réaliser des parois d'embase de formes très variées, s'adaptant à une grande variété de configurations de grappes de satellites, à partir d'un petit nombre d'éléments modulaires de paroi à surface incurvée utilisables quelle que soit la géométrie des embases à réaliser. On réduit ainsi le coût du stockage de ces éléments tout en assurant leur immédiate disponibilité. Le stockage des éléments de paroi plans est simple du fait que ces éléments peuvent être découpés à la demande dans des plaques planes standard. Les éléments de paroi à surface incurvée, comme les éléments plans peuvent être dimensionnés aux plus fortes charges de manière à pouvoir être utilisés sans nouvelles études. Avantageusement, les éléments modulaires 20,21 à surface incurvée, qui sont disposés dans les angles de la section de la paroi de l'embase, sont prééquipés de la partie des organes de liaison 10ᵢ de l'embase et du satellite qu'ils portent, avant la mise en stock de ces éléments modulaires.

Toutes ces dispositions assurent au procédé de fabrication d'embases suivant l'invention des performances remarquables en matière de versatilité, de rapidité d'adaptation et de coût de réalisation des embases en question. Après fabrication en série des parois d'embases adaptées à une géométrie particulière de la structure d'emport d'une grappe de satellites, on complète les embases en les équipant des moyens de basculement 7,15,16,17₁,17₂ et des moyens 18, pour permettre la séparation de chaque satellite, décrits plus haut. Lors de l'installation du satellite 3 sur l'embase 4 qui lui est affectée, on dispose entre eux les organes de liaison temporaires 10ᵢ plus complètement décrits dans la demande de brevet français précitée.

Bien entendu l'invention n'est pas limitée aux modes de réalisation décrits et représentés qui n'ont été donnés qu'à titre d'exemple. C'est ainsi qu'on ne sortirait pas du cadre de l'invention en remplaçant un ou plusieurs des éléments de paroi plans 22, 23, 24 des modes de réalisation des Figures 6 à 8 par des éléments de paroi équivalents, par exemple plats et légèrement cintrés.

## Revendications

1. Procédé de fabrication d'une embase (4) de support d'un satellite artificiel (3), conçue pour être montée sur une plate-forme d'emport d'une pluralité de tels satellites formant partie d'un lanceur spatial assurant la mise en orbite terrestre desdits satellites, les diverses embases étant disposées en couronne sur ladite plate-forme d'emport, chaque embase (4) présentant une paroi cylindrique comprenant des éléments de surface incurvés et des éléments de surface sensiblement plans, **caractérisé en ce qu'**on dispose des éléments de paroi modulaires (20,21) à surface incurvée et des éléments de paroi à surface plane (22,23,24) selon une géométrie d'embase prédéterminée et on assemble lesdits éléments suivant leur bords adjacents, pour réaliser ladite paroi cylindrique de ladite embase (4).

2. Procédé conforme à la revendication 1, **caractérisé en ce que**, préalablement à la disposition des éléments de paroi modulaires à surface incurvée (20,21) selon ladite géométrie d'embase prédéterminée, lesdits éléments de paroi modulaires (20,21) sont retaillés pour s'adapter à ladite géométrie.

3. Procédé conforme à l'une quelconque des revendications 1 et 2, **caractérisé en ce que** lesdits éléments de paroi modulaires (20,21) sont cylindriques de révolution.

4. Procédé conforme à l'une quelconque des revendications 1 à 3, **caractérisé en ce que** ladite géométrie d'embase est choisie parmi une pluralité de telles géométries inscriptibles dans un élément de couronne circulaire, en fonction de la géométrie et du nombre de satellites à monter sur ladite plate-forme d'emport.

5. Procédé conforme à l'une quelconque des revendications 1 à 4, **caractérisé en ce que** lesdits éléments de paroi modulaires (20,21) portent des moyens (10ᵢ) pour établir une liaison temporaire entre l'embase (4) et le satellite (3) qu'elle doit supporter.

6. Procédé conforme à la revendication 5, **caractérisé en ce que**, après l'assemblage desdits éléments (20 à 24) de la paroi latérale de l'embase (4), on installe sur celle-ci a) des moyens (7,15,16) pour faire basculer sélectivement une partie supérieure (5) de ladite embase (4) par rapport à un fond (6) de cette embase, avant le lancement sur son orbite du satellite (3) porté par ladite embase (4) et b) des moyens (18i) pour permettre la séparation du satellite (3) après mise hors service des moyens de liaison (10ᵢ).

7. Procédé conforme à la revendication 6, **caractérisé en ce que** lesdits moyens de basculement comprennent des moyens (7) d'articulation de ladite partie (5) sur ledit fond (6) et un séparateur pyrotechnique (15) qu'on monte sur ladite paroi latérale de l'embase (4) de manière qu'il déchire sélectivement cette paroi selon une ligne séparant ladite partie (5) dudit fond (6).

8. Embase obtenue par la mise en oeuvre du procédé conforme à l'une quelconque des revendications 1 à 7.

9. Embase conforme à la revendication 8, **caractérisée en ce qu'**elle présente en section droite une forme trapézoïdale, s'inscrivant dans un élément de couronne circulaire.

## Patentansprüche

1. Verfahren zur Herstellung eines Sockels (4) für einen künstlichen Satelliten (3), der zur Montage auf einer Transportplattform für mehrere derartige Satelliten bestimmt ist, welche Teil einer die Verbringung der Satelliten in eine Erdumlaufbahn gewährleistenden Trägerrakete ist, wobei die verschiedenen Sockel ringförmig auf der Transportplattform angeordnet sind, wobei jeder Sockel (4) eine zylindrische Wand mit gekrümmten Flächenelementen und im wesentlichen ebenen Flächenelementen aufweist, **dadurch gekennzeichnet, daß** modulare gekrümmte Wandelemente (20, 21) und Wandelemente mit ebener Fläche (22, 23, 24) entsprechend einer vorbestimmten Sockelgeometrie angeordnet werden und die Elemente an ihren benachbarten Rändern miteinander verbunden werden, um die zylindrische Wand des Sockels (4) zu bilden.

2. Verfahren nach Anspruch 1, **dadurch gekennzeichnet, daß** vor dem Anordnen von modularen Wandelementen mit einwärts gekrümmten Flächen (20, 21) entsprechend der vorbestimmten Sockelgeometrie die modularen Wandelemente (20, 21) zu der Geometrie passend zugeschnitten werden.

3. Verfahren nach einem der Ansprüche 1 und 2, **dadurch gekennzeichnet, daß** die modularen Wandelemente (20, 21) drehzylindrisch sind.

4. Verfahren nach einem der Ansprüche 1 bis 3, **dadurch gekennzeichnet, daß** die Sockelgeometrie in Abhängigkeit der Geometrie und der Zahl der auf der Transportplattform zu montierenden Satelliten unter mehreren derartigen Geometrien gewählt wird, die in ein Kreisringelement einschreibbar sind.

5. Verfahren nach einem der Ansprüche 1 bis 4, **dadurch gekennzeichnet, daß** die modularen Wandelemente (20, 21) Einrichtungen (10₁) zum Herstellen einer vorübergehenden Verbindung zwischen dem Sockel (4) und dem Satelliten (3), den er stützen soll, aufweisen.

6. Verfahren nach Anspruch 5, **dadurch gekennzeichnet, daß** nach dem Montieren der Elemente (20 bis 24) der Seitenwand des Sockels (4) auf diesem a) Einrichtungen (7, 15, 16) zum selektiven Kippen eines oberen Teils (5) des Sockels (4) in bezug zu einem Boden (6) des Sockels vor dem Abschießen des von dem Sockel (4) gestützten Satelliten in dessen Orbit und b) Einrichtungen (18i) zum Ermöglichen des Lösens des Satelliten (3) nach dem Deaktivieren der Verbindungseinrichtungen (10ᵢ) installiert werden.

7. Verfahren nach Anspruch 6, **dadurch gekennzeichnet, daß** die Kippeinrichtungen Einrichtungen (7) zum Verschwenken des Teils (5) auf dem Boden (6) und eine pyrotechnische Trenneinrichtung (15) aufweist, die an der Seitenwand des Sockels (4) derart angebracht ist, daß sie diese Wand selektiv entlang einer das genannte Teil (5) vom Boden (6) trennenden Linie abreißt.

8. Sockel, erhalten durch die Durchführung des Verfahrens nach einem der Ansprüche 1 bis 7.

9. Sockel nach Anspruch 8, **dadurch gekennzeichnet, daß** er im Querschnitt Trapezform hat, die in ein Kreisringelement einschreibbar ist.

## Claims

1. A method of making a supporting base plate (4) of an artificial satellite (3), designed to be mounted on a platform for dispensing a plurality of such satellites forming part of a launch vehicle for placing said satellites in terrestrial orbit, the various base plates being disposed in a ring on said dispensing platform, each base plate (4) having a cylindrical wall including curved surface elements and substantially plane surface elements, which method is **characterized in that** modular wall elements (20, 21) with a curved surface and wall elements (22, 23, 24) with a plane surface are disposed in accordance with a predetermined base plate geometry and said elements are assembled at their adjacent edges to form said cylindrical wall of said base plate (4).

2. A method according to claim 1, **characterized in that**, before disposing said curved surface modular wall elements (20, 21) in accordance with said predetermined base plate geometry, said modular wall elements (20, 21) are trimmed to adapt them to said geometry.

3. A method according to either claim 1 or claim 2, **characterized in that** said modular wall elements (20, 21) are portions of circular cylinders.

4. A method according to any of claims 1 to 3, **characterized in that** said base plate geometry is chosen from a plurality of such geometries that can be inscribed within a circular ring element as a function of the geometry and the number of satellites to be mounted on said dispensing platform.

5. A method according to any of claims 1 to 4, **characterized in that** said modular wall elements (20, 21) carry means (10ᵢ) for establishing a temporary connection between the base plate (4) and the satellite (3) that it has to support.

6. A method according to claim 5, **characterized in that**, after assembling said elements (20 to 24) of the lateral wall of the base plate (4), there are installed thereon: a) means (7, 15, 16) for selectively tilting a top portion (5) of said base plate (4) relative to a base portion (6) of said base plate before launching into its orbit the satellite (3) carried by said base (4), and b) means (18i) for separating the satellite (3) after deactivation of the connecting means (10ᵢ).

7. A method according to claim 6, **characterized in that** said tilting means include means (7) for articulating said portion (5) to said edge (6) and a pyrotechnic separator (15) mounted on said lateral wall of the base plate (4) so that it tears said wall selectively along a line separating said portion (5) from said base portion (6).

8. A base plate obtained by the method according to any of claims 1 to 7.

9. A base plate according to claim 8, **characterized in that** it has a trapezoidal cross section inscribed in a circular ring element.
